# EUROPÄISCHE PATENTSCHRIFT

(11) **EP 1 899 129 B1**
(45) Veröffentlichungstag und Bekanntmachung des Hinweises auf die Patenterteilung: **03.10.2012**
(21) Anmeldenummer: 06743132.0
(22) Anmeldetag: 08.06.2006
(51) Int. Cl.: B29B 17/02, B03B 5/28, B03B 5/44, B29K 105/00

(54) **Verfahren zur Trennung von unterschiedlich additivierten Polymerbestandteilen sowie dessen Verwendung**
Method for separating polymer components comprising different additives and use of said method
Procédé de séparation de constituants polymères contenant différents additifs et utilisation dudit procédé

(30) Priorität: 08.06.2005 DE 102005026450
(43) Veröffentlichungstag der Anmeldung: 19.03.2008
(73) Patentinhaber: Fraunhofer-Gesellschaft zur Förderung der angewandten Forschung e.V., 80686 München (DE)
(72) Erfinder: SCHLUMMER, Martin, 85051 Ingolstadt (DE); MÄURER, Andreas, 85354 Freising (DE)
(86) Internationale Anmeldenummer: PCT/EP2006/005504
(87) Internationale Veröffentlichungsnummer: WO 2006/131377

(56) Entgegenhaltungen:
- EP-A- 0 422 460
- DE-A1- 4 315 480
- DE-A1- 4 405 903
- DE-A1- 10 344 861
- DE-A1- 19 949 656

## Beschreibung

Die Erfindung betrifft ein Verfahren zur Trennung von mit Flammschutzmitteln additivierten Polymeren auf der Basis von Polystyrol, dessen Copolymeren und/oder Blends. Verwendung findet dieses Verfahren insbesondere beim Recycling von flammgeschützten Kunststoffen, insbesondere aus Elektroaltgeräten.

Jährlich fallen in Europa etwa 6 Mio. t Elektroaltgeräte an. Etwa ein Fünftel dieser Abfälle sind Kunststoffe. Die EU-Richtlinie 2002/96/EC (WEEE-Directive) fordert hohe Verwertungsquoten, die nur mit einem werkstofflichen Recyclingverfahren für die Kunststoff-Fraktionen erreicht werden können.

Allerdings ist ein werkstoffliches Recycling für Kunststoffe aus Elektroaltgeräten aufgrund ihrer Werkstoffvielfalt und wegen ihres hohen Schadstoffgehaltes nicht Stand der Technik. Als Schadstoffe sind die veralteten bromierten Flammschutzadditive mit hohem Dioxinbildungspotential zu nennen. Neue Arbeiten belegen auch toxische Wirkungen der bromierten Flammhemmer selbst, insbesondere der PBDE und PBB.

So sind diese früher vielfach eingesetzte Additive, die mit den heutigen Elektroaltgeräten entsorgt werden, mittlerweile mit Verboten und strengen Grenzwerten belegt: 2002/95/EC RoHS-Richtlinie und Penta-Richtlinie 2003/11/EC.

Ein werkstoffliches Recycling von Kunststoffen aus Elektronikschrott bedarf zunächst einer Materialsortierung, da im Elektronikschrott mindestens 15 verschiedene und in der Regel inkompatible Kunststoffarten zu erwarten sind. Die Materialsortierung kann über spektroskopische Methoden an großen Kunststoffteilen (Gehäuse von Bildschirmgeräten) erfolgen oder zur Materialsortierung von kunststoffhaltigen Shredderfraktionen über eine Dichtetrennung. Letztere erlaubt in einem zweistufigen Prozess die Abtrennung von Acrylnitril-Butadien-Styrol (ABS) und Polystyrol (PS) von einer leichten Polyethylen/Polypropylen-Fraktion sowie von einer schweren PVC-reichen Fraktion. Eine Trennung von auf Brombasis flammgeschützten und nicht-flammgeschützten Materialien der Mittelfraktion (ABS und PS) erfolgt nicht.

Die Firma Hamos bietet das Gleitfunkenspektrometer Slide-Spec-S2 an, mit dem eine gleichzeitige Erkennung des Kunststofftyps sowie die Identifizierung von bromhaltigen Flammschutzmitteln erfolgen kann (http://hamos.com/en/products/plastic-identification.htm) .

Zur Entsorgung der zum Teil mit bromierten Flammschutzadditiven ausgerüsteten Kunststoffabfälle aus der Kunststoffshreddertrennung wurden daher thermische und rohstoffliche Verfahren entwickelt, z.B. Pyrolyse wie Haloclean u.a. oder Schwarze Pumpe (Uddin, M.A.; Bhaskar, T.; Kaneko J.; Muto, A.; Sakata, Y.; Matsui, T. (2002) "Dehydrohalogenatiopn during pyrolysis of brominate flame retardant containing high impact polystyrene (HIPS.Br) mixed with polyvinylchloride (PVC). Fuel 81, pp 1819-1825).

Für ein hochwertiges werkstoffliches Recycling der enthaltenen Kunststoffe wurden verschiedene chemische und physikalische Verfahren zur Abtrennung der bromierten Flammschutzadditive im Labor- und kleintechnischen Maßstab entwickelt. Hierzu zählen die reduktive Halogenierung, wie in Mäurer, A., Schlummer, M. (2004) "Good as new. Recycling plastics from WEEE and packaging waste." Waste Management World, May-June 2004, pp 33-43 beschrieben, oder auch die selektive Extraktion (Von Quast, O. (1996): Universelle Methode zur Dehalogenierung von Thermoplasten. Dissertation an der TU Berlin, Schriftenreihe Kunststoff-Forschung 36, Hrsg. Prof. Käufer, und EP 0 949 293).

Das oben genannte Gleitfunkspektrometer ist nur für große Kunststoffteile anwendbar und nicht zur automatisierten Sortierung von Shredderkunststoffen, d.h. nicht für eine großtechnische Anwendung geeignet. Die Anwendung in spezialisierten Demontagebetrieben ist möglich, allerdings nur mit hohem spezifischem Zeitaufwand.

Die DE 199 49 656 beschreibt ein Verfahren zur mechanischen Trennung von Kunststoffsorten, wobei die Kunststoffe zunächst zerkleinert, durch Sensoren identifiziert und im Anschluss durch Wurfaussonderung getrennt werden.

Aus der DE 43 15 480 ist eine Vorrichtung zum Abtrennen zerkleinerter Kunststoff-Abfälle mit unterschiedlichen spezifischen Gewichten bekannt, die in einer Wasserströmung gefördert werden, wobei die Strömung derart eingestellt ist, dass die unterschiedlichen Kunststoffteilchen getrennt aufgefangen und abgeführt werden.

Nachteilig bei den genannten thermischen und rohstofflichen Verfahren ist, dass bestenfalls neue petrochemische Rohstoffe produziert oder lediglich der

Weitere Verfahren sind aus den Druckschriften US 5 653 867 und EP-A-1 405 706 bekannt.

Heizwert der Kunststoffe genutzt werden.

Chemische Verfahren (reduktive Dehalogenierung) bedürfen des Einsatzes teurer Reduktionsmittel (z.B. reines Natrium), die zudem ein wasserfreies Arbeiten, d.h. eine sehr gründliche, energieintensive Trocknung der Abfälle erfordern.

Dagegen zeigen die oben genannten physikalischen Verfahren, die auf dem Prinzip unterschiedlichen Löseverhaltens von Polymer und Flammschutzadditiv arbeiten, Schwächen bei der Abtrennung von schwerlöslichen Additiven, insbesondere Decabromdiphenylether, (DBDE) und 1,2-Bis-Tribromphenoxyethan (TBPE). Zudem werden größere Lösungsmittelmengen benötigt, die in der Regel destillativ zurückgewonnen werden müssen.

Weiterhin spricht gegen die genannten thermischen, rohstofflichen, chemischen und physikalischen Verfahren, dass die Umsetzung mit hohen Investitionskosten verbunden ist und erst bei hohen Durchsatzmengen (> 1000 Jahrestonnen) rentabel betrieben werden können.

Aufgabe der vorliegenden Erfindung,war es daher, die beschriebenen Nachteile des Standes der Technik zu beseitigen und ein einfach zu handhabendes und damit kostengünstiges Verfahren bereitzustellen, das die Abtrennung von flammschutzfreien technischen Kunststoffen erlaubt.

Diese Aufgabe wird durch das Verfahren mit den Merkmalen des Anspruchs 1 gelöst. Anspruch 16 beschreibt die erfindungsgemäße Verwendung des Verfahrens. Die weiteren abhängigen Ansprüche zeigen vorteilhafte Weiterbildungen auf.

Erfindungsgemäß wird ein Verfahren zur Trennung von unterschiedlich additivierten Polymeren, auf der Basis von Polystyrol, dessen Copolymeren und/oder Blends bereitgestellt. Das erfindungsgemäße Verfahren beruht dabei auf einer Dichtetrennung mit mindestens einem flüssigen oder gasförmigen Trennmedium. Hierbei kommen als eine erfindungsgemäße Variante statische Dichtetrennungen in Frage, die durch entsprechende Beeinflussungen der Strömung der Medien unterstützt werden können. Die Dichtetrennung kann in Rührkesseln oder Zyklonen durchgeführt werden. Ebenso sind als weitere Variante alleinig auf Strömungseinflüssen basierende Trennungen möglich. Hier sind z.B. die Windsichtung oder ein Wirbelbett zu nennen.

Die erfindungsgemäße Dichtetrennung erlaubt die beispielsweise die Abtrennung von nicht flammgeschützten und flammschutzfreien, gefahrstofffreien technischen Kunststoffen, insbesondere ABS und High Impact PS (HIPS) aus Kunststoffmischungen des Elektronikschrotts. Sie geht dabei über die beschriebene zweistufige Dichtetrennung zur Gewinnung der Fraktionen PE/PP, ABS/PS und PVC hinaus und ermöglicht das werkstoffliche Recycling der wirtschaftlich interessanten Mittelfraktion im Einklang mit den oben genannten europäischen Normen, 2002/95/EC RoHS-Richtlinie und Penta-Richtlinie 2003/11/EC.

Eine brombasierte Flammschutzausrüstung als eine wichtige Additivierung wird durch den Zusatz von ca. 10 bis 20 % bromierter Flammschutzmittel erreicht (J. H. Song, J. Vinyl Addit. Technol. 1 (1995) 46). Diese Flammschutzmittel weisen eine vergleichsweise hohe Dichte von über 2 g/cm³ (z.B. Decabromdiphenylether 3,3 g/cm³ und Tetrabrombisphenol A 2,2 g/cm³) auf, sodass ein so ausgerüsteter ABS- oder HIPS Compound eine um ca. 0,1 bis 0,2 g/cm³ höhere Dichte aufweist als der Basiskunststoff. Deshalb kann mit Hilfe eines Trennmediums im geeigneten Dichtebereich eine Dichtetrennung unterschiedlich additivierter Kunststoffe oder Verbundstoffe erfolgen.

Hieran war besonders überraschend, dass trotz Anwesenheit von weiteren Füllstoffen, durch die die Dichte des Systems ebenfalls beeinflusst wird, die erfindungsgemäße Abtrennung erzielt werden kann.

Im Gegensatz zu den im Stand der Technik aufgeführten rohstofflichen, thermischen, chemischen und physikalischen Verfahren ist das beschriebene Verfahren großtechnisch mit am Markt verfügbaren Aggregaten umsetzbar und bedarf nur sehr geringer Investitionskosten. Es ist mit geringem personellem Aufwand und Platzbedarf zu betreiben und ist bereits für geringe Durchsatzmengen wirtschaftlich darzustellen.

Damit kann das Verfahren von klein- und mittelständigen Unternehmen der Elektronikschrottverwertung betrieben werden und ermöglicht diesen eine deutliche Kostenersparnis. Die mittels modifizierter Dichtetrennung gewonnen flammschutzmittelfreien ABS/PS-Fraktionen können als Wertstoffe erlöst und müssen nicht kostenpflichtig entsorgt werden.

Der Einsatz von teueren Reduktionsmitteln oder Lösungsmitteln, die destillativ regeneriert werden müssen, wird vermieden. Aufgrund mechanisch recyclebarer Trennmedien lassen sich zudem die Betriebskosten niedrig halten.

Es findet keine thermische-mechanische Belastung des Polymers statt und damit auch keine Materialschädigung und kein Molekulargewichtsabbau. Die originären Polymereigenschaften und die Polymerqualität bleiben erhalten.

Vorzugsweise wird ein Trennmedium verwendet, das eine spezifische Dichte im Bereich von 1,06 bis 1,14 g/L, besonders bevorzugt von 1,08 bis 1,12 g/L aufweist, wodurch sich ein Teil der Polymere, d.h. die Polymere, die mit schwereren Verbindungen additiviert sind, in der Sinkfraktion und die unterschiedlich additivierten Polymere, d.h. die Polymere, die mit leichteren Verbindungen additivert sind, in der Schwimmfraktion sammeln und dadurch einfach voneinander getrennt werden.

Hinsichtlich des Trennmediums gibt es grundsätzlich keinerlei Einschränkungen, sofern die beschriebene Auftrennung in die Sink- und Schwimmfraktion erfolgt. Bevorzugt wird als Trennmedium eine Mischung aus Wasser und einem mit Wasser mischbaren Lösungsmittel mit einer Dichte > 1 g/L, z.B. Glycerin, oder auch eine Salzlösung, z.B. mit Halogeniden der Alkali- oder Erdalkalimetalle, eingesetzt. Diese Systeme bringen den Vorteil mit sich, dass eine sehr genaue Einstellung der Dichte erfolgen kann. Die Polymere der Schwimmfraktion werden vorzugsweise mechanisch abgetrennt, wobei insbesondere Abtropfsiebe eingesetzt werden.

Die Verwendung von Mischungen aus Wasser und Glycerin hat den besonderen Vorteil, dass derartige Mischungen nicht korrosiv sind und eine simultane effektive Wäsche der Kunststoffabfälle ermöglichen. Weiterhin sind derartige Mischungen sehr einfach zu regenerieren. Verluste an Wasser oder Glycerin können einfach nachdosiert werden, um Abweichungen von der Solldichte auszugleichen.

In einer einfachen Variante ist es auch möglich, dass die Sinkfraktion sedimentiert wird und im Anschluss mechanisch, insbesondere durch Siebung, abgetrennt wird. Weiterhin ist der Einsatz eines höheren Zentrifugalfeldes, z.B. einer Zentrifuge, bevorzugt, da durch das Zentrifugalfeld eine beschleunigte Abtrennung erreicht werden kann.

Neben den flüssigen Trennmedien besteht auch die Möglichkeit, eine Dichtetrennung durch Windsichtung zu realisieren, wobei ein Teil der Polymere durch die Luftströmung mitgerissen werden, während die unterschiedlich additivierten Polymere aufgrund ihrer Dichte absinken und so abgetrennt werden. In gleicher Weise kann auch ein Wirbelbett zur Trennung der Polymere eingesetzt werden.

Der in der vorliegenden Anmeldung benutzte Begriff der Kunststoffe umfasst sowohl Kunststoffe, deren Gemische oder auch ganz allgemein Verbundstoffe mit andern Materialien.

Das Verfahren eignet sich insbesondere für Copolymere und Blends von Polystyrol. Diese sind bevorzugt ausgewählt aus der Gruppe bestehend aus Styrol-Butadien (SB), Styrolacrylnitril (SAN), Acrylnitril-Butadien-Styrol (ABS), Acrylester-Styrol-Acrylnitril (ASA) und deren Blends, z.B. mit Polycarbonat (PC) oder Polyphenylenoxid (PPO).

Es ist ebenso möglich, dass der Kunststoff weitere polymere Bestandteile enthält. Hierzu zählen beispielsweise andere Polymere ausgewählt aus der Gruppe bestehend aus Polyolefinen, Polyamiden, Polyvinylchloriden, Polyurethanen, Polycarbonaten, Polyacrylaten, Polymethacrylaten, Polyesterharzen, Epoxidharzen, Polyoxyalkylenen, Polyalkylenterephthalaten und Polyvinylbutyral sowie deren Copolymeren und Blends. Erfindungsgemäß sind als Additive Flammschutzmittel enthalten, bevorzugt solche, die auf Bromverbindungen basieren. Hierzu zählen insbesondere polybromierte Diphenylether, polybromierte Biphenyle, bis-[Dibromopropoxy-dibromphenyl]propan, Hexabromdecan und bis-(Tribromphenoxy)ethan.

Die zuvor genannten weiteren polymeren Bestandteile können vorzugsweise in einem vorgelagerten Schritt durch mindestens eine weitere Dichtetrennung abgetrennt werden. So können z.B. Kunststofffraktionen mit geringer Dichte durch eine weitere Dichtetrennung mit einem Trennmittel mit einer spezifischen Dichte im Bereich von 0,95 bis 1,05 g/L durchgeführt werden. Polymere Bestandteile mit einer höheren Dichte können beispielsweise durch eine weitere Dichtetrennung mit einem Trennmittel mit einer spezifischen Dichte im Bereich von 1,15 bis 1,25 g/L durchgeführt werden.

Grundsätzlich ist es natürlich auch möglich, dass in den durchgeführten Dichtetrennungen weitere nicht-polymere Bestandteile des Grundstoffs entfernt werden, z.B. können Schmutzpartikel durch Filtration entfernt werden.

Das erfindungsgemäße Verfahren ist anwendbar auf
- Gehäusefraktionen aus der Demontage von Bildschirmgeräten, die eine geringe Materialvielfalt aufweisen,
- nach dem Stand der Technik über Dichtefraktionierung angereicherte ABS- und PS-haltige Kunststoffshredder aus der Elektronikschrottaufbereitung.

Anhand der nachfolgenden Figuren und Beispiele soll der erfindungsgemäße Gegenstand näher erläutert werden, ohne diesen auf die hier gezeigten speziellen Ausführungsformen einschränken zu wollen.
Fig. 1 zeigt die Massenbilanz (a) und Brombilanz (b) einer Dichtefraktionierung nach dem erfindungsgemäßen Verfahren von Elektroaltgeräten gemäß Beispiel 1.
Fig. 2 zeigt die Massenbilanz (a) und Brombilanz (b) einer erfindungsgemäßen Dichtefraktionierung eines Kunststoffshredderabfalls gemäß Beispiel 2.

### Beispiel 1

### Gehäusekunststoffabfälle aus Elektroaltgeräte-Demontage

ABS, HIPS sowie weiter Styrolcopolymere werden durch eine zweistufige Dichtetrennung mit Trennschichten 1,0 g/cm³ (Wasser) und 1,2 g/cm³ (Mischung Wasser/Glycerin) aus einer Kunststoffabfallmischung aus der Altgerätedemontage angereichert. Die Dichtetrennung erfolgt dabei in 5-Liter Rührreaktoren bei einem S/L-Verhältnis von 1:5. Die Zielfraktion 1,0 bis 1,2 g/cm³ umfasst 65 Gew.-%. In einem weiteren Schritt wird diese Zielfraktion in einer Mischung aus Glycerin/Wasser mit der Dichte von 1,1 g/cm³ fraktioniert. Die Schwimmfraktion (Dichte 1,0 bis 1,1) wird abgesiebt, die Sinkfraktion ebenfalls durch Siebung gewonnen. Alle vier Fraktionen (Dichte < 1, 1,0 bis 1,1, 1,1 bis 1,2 und > 1,2) werden getrocknet, gewogen und mittels Röntgenfluoreszenzmessung (ED-RFA-Gerät der Fa. Spectro) auf Brom analysiert. Diese Werte erlauben eine Massen- sowie eine Brombilanz.

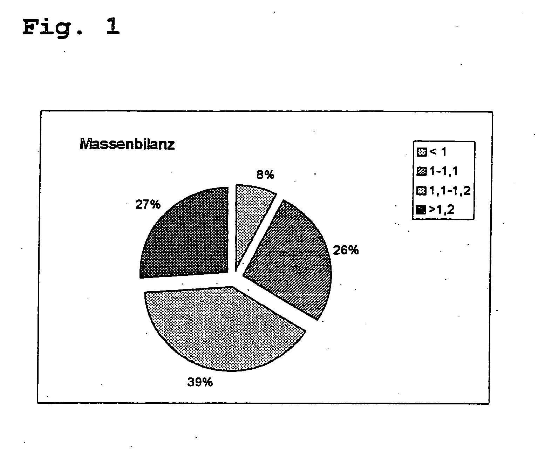

Die Zielfraktion des Verfahrens (Dichte 1,0 bis 1,1) umfasst 26 % des Inputmaterials, aber nur 0,9 % der Bromfracht (Fign. 1a) und b)). Die Abtrennung der bromierten Flammschutzmittel ist somit hocheffektiv. Die spezifische Flammschutzmittelanalytik auf Octabromdiphenylether mittels HPLC-UV/MS¹⁰ ergab, dass die Zielfraktion den Grenzwert von 1000 ppm sicher unterschreitet, während er in den beiden Schwerfraktionen deutlich überschritten wird.

**Tabelle 1**

| Dichtefraktion | Konzentration Octabromdiphenylether [ppm] |
|---|---|
| < 1 | 400 |
| 1.0 - 1.1 | 470 |
| 1.1 - 1.2 | 18.250 |
| > 1.2 | 29.700 |
| Grenzwert | 1.000 |

### Beispiel 2

### Kunststoffreiche Shredderleichfraktion aus Elektronikschrottverwertung

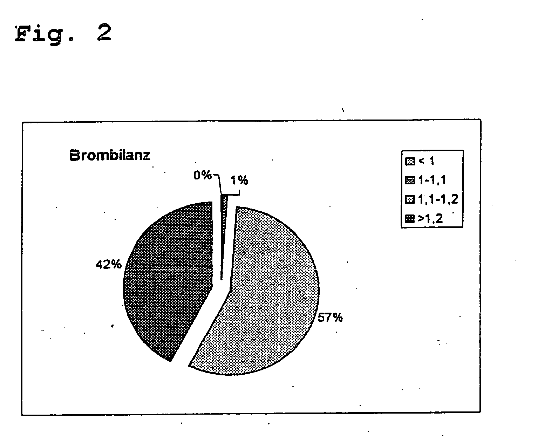

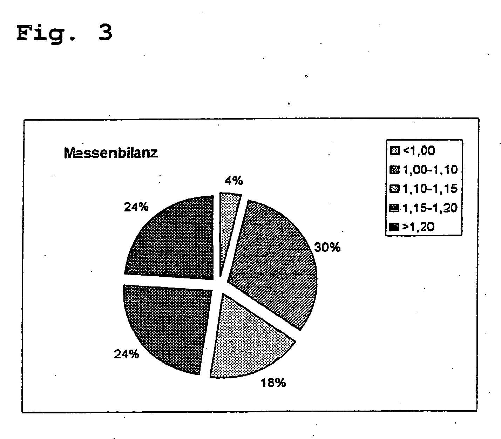

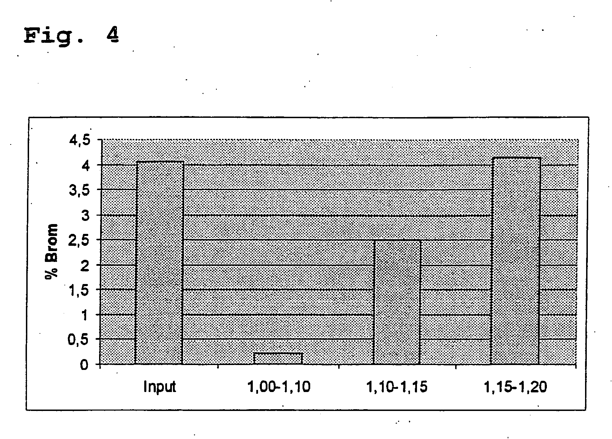

Ein Kunststoffabfall aus der Shredderleichtfraktion einer Elektronikschrottverwertung wird in Dichtetrennmedien der Dichten 1,0, 1,10, 1,15 und 1,20 (Wasser bzw. definierte Wasser-Mucasol^{®}-Kochsalzmischungen) in Rührreaktoren fraktioniert. Die Massenbilanz ist in Fig. 2a) dargestellt. Anschließend wurden die Fraktionen 1,0 bis 1,1, 1,10 bis 1,15 und 1,15 bis 1,20 mittels Röntgenfluoreszenzmessung (ED-RFA-Gerät der Fa. Spectro) auf Brom analysiert (s. Bromgehalte in Fig. 2b)).

Die Zielfraktion der beschriebenen Erfindung 1,0 bis 1,1 g/cm³ entspricht 30 Gew.-% des Inputmaterials und enthält unter 0,04 % Brom. Selbst für den unwahrscheinlichen Fall, dass nur Octabromdiphenylether (Br-Gehalt 79 %) für den Br-Gehalt verantwortlich ist, wird der Grenzwert von 1000 ppm eingehalten (rechnerische maximale Konzentration von OctaBDE: 500 ppm).

## Patentansprüche

1. Verfahren zur Trennung von flammgeschützten von flammschutzfreien Polymeren auf der Basis von Polystyrol, dessen Copolymeren und/oder Blends mittels einer Dichtetrennung mit mindestens einem flüssigen Trennmedium, wobei das flüssige Trennmedium eine Mischung aus Wasser und mit Wasser mischbaren Lösungsmitteln mit einer Dichte > 1 g/l oder eine Salzlösung ist und das flüssige Trennmedium eine spezifische Dichte im Bereich von 1,06 bis 1,14 g/L aufweist, so dass die Polymere in der Sinkfraktion von den in der Schwimmfraktion abgetrennt werden.

2. Verfahren nach Anspruch 1,
**dadurch gekennzeichnet, dass** das Trennmedium eine Mischung aus Wasser und Glycerin ist.

3. Verfahren nach einem der Ansprüche 1 oder 2,
**dadurch gekennzeichnet, dass** die Polymere der Schwimmfraktion mechanisch, insbesondere mittels Siebung, abgetrennt werden.

4. Verfahren nach einem der vorhergehenden Ansprüche,
**dadurch gekennzeichnet, dass** die Sinkfraktion sedimentiert wird.

5. Verfahren nach dem vorhergehenden Anspruch,
**dadurch gekennzeichnet, dass** die sedimentierte Sinkfraktion im Anschluss mechanisch, insbesondere durch Siebung, abgetrennt wird.

6. Verfahren nach einem der vorhergehenden Ansprüche,
**dadurch gekennzeichnet, dass** die Trennung der unterschiedlich additivierten Polymere durch ein höheres Zentrifugalfeld beschleunigt wird.

7. Verfahren nach einem der vorhergehenden Ansprüche,
**dadurch gekennzeichnet, dass** Polymere, Copolymere und Blends von Polystyrol ausgewählt sind aus der Gruppe bestehend aus Polystyrol, Styrol-Butadien (SB), Styrol-Acrylnitril (SAN), Acrylnitril-Butadien-Styrol (ABS), Acrylester-Styrol-Acrylnitril (ASA) und deren Blends, z.B. mit Polycarbonat (PC) oder Polyphenylenoxid (PPO).

8. Verfahren nach einem der vorhergehenden Ansprüche,
**dadurch gekennzeichnet, dass** der Kunststoff weitere polymere Bestandteile enthält.

9. Verfahren nach dem vorhergehenden Anspruch,
**dadurch gekennzeichnet, dass** die weiteren polymeren Bestandteile ausgewählt sind aus der Gruppe bestehend aus Polyolefinen, Polyamiden, Polyvinylchloriden, Polyurethanen, Polycarbonaten, Polyacrylaten, Polymethacrylaten, Polyesterharzen, Epoxydharzen, Polyoxyalkylenen, Polyalkylenterephthalaten und Polyvinylbutyral sowie deren Copolymeren und Blends.

10. Verfahren nach einem der beiden vorhergehenden Ansprüche,
**dadurch gekennzeichnet, dass** die weiteren polymeren Bestandteile in einem vorgelagerten Schritt durch mindestens eine weitere Dichtetrennung abgetrennt werden.

11. Verfahren nach dem vorhergehenden Anspruch,
**dadurch gekennzeichnet, dass** eine weitere Dichtetrennung mit einem Trennmittel mit einer spezifischen Dichte im Bereich von 0,95 bis 1,05 g/L durchgeführt wird.

12. Verfahren nach einem der beiden vorhergehenden Ansprüche,
**dadurch gekennzeichnet, dass** eine weitere Dichtetrennung mit einem Trennmittel mit einer spezifischen Dichte im Bereich von 1,15 bis 1,25 g/L durchgeführt wird.

13. Verfahren nach einem der vorhergehenden Ansprüche,
**dadurch gekennzeichnet, dass** in den Dichtetrennungen weitere nicht-polymere Bestandteile des Kunststoffs abgetrennt werden.

14. Verfahren nach mindestens einem der vorhergehenden Ansprüche,
**dadurch gekennzeichnet, dass** der Kunststoff als Additive auf Bromverbindungen basierende Flammschutzmittel enthält.

15. Verfahren nach einem der vorhergehenden Ansprüche,
**dadurch gekennzeichnet, dass** der Kunststoff niedermolekulare Additive, z.B. Weichmacher, enthält.

16. Verwendung des Verfahrens nach einem der vorhergehenden Ansprüche zum Recycling von Kunststoffen aus Elektroaltgeräten.

## Claims

1. Method for separating flame-protected from flame retardant-free polymers based on polystyrene, copolymers and/or blends thereof by means of a density separation with at least one liquid separating medium, wherein the liquid separating medium is a mixture of water and solvents mixable with water with a density of > 1 g/l or is a salt solution, and the liquid separating medium has a relative density in the range of 1.06 to 1.14 g/L, so that the polymers in the sink fraction are separated from those in the float fraction.

2. Method according to claim 1, **characterised in that** the separating medium is a mixture of water and glycerol.

3. Method according to one of claims 1 or 2, **characterised in that** the polymers of the float fraction are separated mechanically, in particular by means of screening.

4. Method according to one of the preceding claims, **characterised in that** the sink fraction is precipitated out.

5. Method according to one of the preceding claims, **characterised in that** the precipitated sink fraction is then separated mechanically, in particular by screening.

6. Method according to one of the preceding claims, **characterised in that** the separation of the polymers containing different additives is accelerated by a higher centrifugal field.

7. Method according to one of the preceding claims, **characterised in that** polymers, copolymers and blends of polystyrene are selected from the group comprising polystyrene, styrene butadiene (SB), styrene acrylonitrile (SAN), acrylonitrile butadiene styrene (ABS), acrylonitrile styrene acrylate (ASA) and blends thereof, e.g. with polycarbonate (PC) or polyphenylene oxide (PPO).

8. Method according to one of the preceding claims, **characterised in that** the plastic contains further polymer constituents.

9. Method according to the preceding claim, **characterised in that** the further polymer constituents are selected from the group comprising polyolefins, polyamides, polyvinyl chlorides, polyurethanes, polycarbonates, polyacrylates, polymethacrylates, polyester resins, epoxy resins, polyoxyalkylenes, polyalkylene terephthalates and polyvinyl butyral as well as copolymers and blends thereof.

10. Method according to one of the two preceding claims, **characterised in that** the further polymer constituents are separated in a preceding step by at least one further density separation.

11. Method according to the preceding claim, **characterised in that** a further density separation is conducted with a separating medium with a relative density in the range of 0.95 to 1.05 g/L.

12. Method according to one of the two preceding claims, **characterised in that** a further density separation is conducted with a separating medium with a relative density in the range of 1.15 to 1.25 g/L.

13. Method according to one of the preceding claims, **characterised in that** in the density separations further non-polymer constituents of the plastic are separated.

14. Method according to at least one of the preceding claims, **characterised in that** the plastic contains flame retardants based on bromine compounds as additives.

15. Method according to one of the preceding claims, **characterised in that** the plastic contains low-molecular additives, e.g. softeners.

16. Use of the method according to one of the preceding claims for recycling plastics from waste electrical devices.

## Revendications

1. Procédé permettant de séparer des polymères ignifuges de polymères non protégés contre les flammes à base de polystyrène, de ses copolymères et/ou mélange par séparation par densité avec au moins un agent de séparation liquide, cet agent de séparation liquide étant un mélange d'eau et de solvants miscibles avec l'eau ayant une densité > à 1 g/l ou une solution saline, et l'agent de séparation liquide présentant une densité spécifique située dans la plage de 1,06 à 1,14 g/l de sorte que les polymères se trouvant dans la fraction plongeante soient séparés des polymères se trouvant dans la fraction surnageante.

2. Procédé conforme à la revendication 1,
**caractérisé en ce que**
l'agent de séparation est un mélange d'eau et de glycérine.

3. Procédé conforme à la revendication 1 ou 2,
**caractérisé en ce que**
les polymères de la fraction surnageante sont séparées mécaniquement, en particulier par tamisage.

4. Procédé conforme à l'une des revendications précédentes,
**caractérisé en ce que**
la fraction plongeante ou décantée est sédimentée.

5. Procédé conforme à la revendication précédente,
**caractérisé en ce que**
la fraction plongeante sédimentée est ensuite séparée mécaniquement en particulier par tamisage.

6. Procédé conforme à l'une des revendications précédentes,
**caractérisé en ce que**
la séparation des polymères renfermant des additifs différents est accélérée par un champ centrifuge élevé.

7. Procédé conforme à l'une des revendications précédentes,
**caractérisé en ce que**
des polymères, copolymères et mélange de polystyrène sont choisis dans le groupe constitué par le polystyrène, le styrène-butadiène (SB), le styrène-acrylonitrile (SAN), l'acrylonitrile-butadiène-styrène (ABS), l'ester-acrylique-styrène-acrylonitrile (ASA) et leurs mélange par exemple avec du polycarbonate (PC) ou de l'oxyde de polyphénylène (PPO).

8. Procédé conforme à l'une des revendications précédentes,
**caractérisé en ce que**
le matériau synthétique renferme d'autres composants polymères.

9. Procédé conforme à la revendication précédente,
**caractérisé en ce que**
les autres composants polymères sont choisis dans le groupe formé par les polyoléfines, les polyamides, les chlorures de vinyle, les polyuréthanes, les polycarbonates, les polyacrylates, les poly-méthacrylates, les résines de polyester, les résines époxy, les polyoxyalkylènes, les polyalkylèneteréphthalates et le polyvinyl butyral, ainsi que leurs copolymères et mélanges.

10. Procédé conforme à l'une des deux revendications précédentes,
**caractérisé en ce que**
les autres composants polymères sont séparés dans une étape antérieure par au moins une autre séparation par densité.

11. Procédé conforme à la revendication précédente,
**caractérisé en ce qu'**
une autre séparation par densité est mise en oeuvre avec un agent de séparation ayant une densité spécifique située dans la plage de 0,95 à 1,05 g/l.

12. Procédé conforme à l'une des deux revendications précédentes,
**caractérisé en ce qu'**
une autre séparation par densité est mise en oeuvre avec un agent de séparation ayant une densité spécifique située dans la plage de 1,15 à 1,25 g/l.

13. Procédé conforme à l'une des revendications précédentes,
**caractérisé en ce que**
dans les séparations par densité, d'autres composants non polymères du matériau synthétique sont séparés.

14. Procédé conforme à au moins une des revendications précédentes,
**caractérisé en ce que**
le matériau synthétique renferme entant qu'additif des agents ignifuges à base de composés de brome.

15. Procédé conforme à l'une des revendications précédentes,
**caractérisé en ce que**
le matériau synthétique renferme des additifs à bas poids moléculaire, par exemple des plastifiants.

16. Utilisation du procédé conforme à l'une des revendications précédentes pour recycler des matériaux synthétiques dans des appareils électriques usagés.
